# EUROPÄISCHE PATENTSCHRIFT

(11) **EP 2 548 765 B1**
(45) Veröffentlichungstag und Bekanntmachung des Hinweises auf die Patenterteilung: **13.05.2015**
(21) Anmeldenummer: 12175988.0
(22) Anmeldetag: 11.07.2012
(51) Int. Cl.: B60P 1/48, B60P 7/13

(54) **Sicherungseinrichtung zur Sicherung von austauschbaren Ladungsbehältern auf einem Absetzkipper und Absetzkipper mit derartiger Sicherungseinrichtung zur Aufnahme von austauschbaren Ladungsbehältern**
Securing device for securing exchangeable load containers on a skip lorry and skip lorry with such a securing device for holding exchangeable load containers
Dispositif de sécurité pour la sécurisation des conteneurs de fret interchangeables sur une benne basculante, et benne basculante avec un tel dispositif de sécurité pour la tenue de conteneurs interchangeables

(30) Priorität: 22.07.2011 CH 12272011
(43) Veröffentlichungstag der Anmeldung: 23.01.2013
(73) Patentinhaber: UT Umwelt- und Transporttechnik AG, 9491 Ruggell (LI)
(72) Erfinder: Veith, Edi, 6822 Schnifis (AT)
(74) Vertreter: Hasler, Erich

(56) Entgegenhaltungen:
- EP-A2- 1 661 755
- US-A- 3 399 795
- US-A- 3 857 504
- US-A- 4 058 231
- US-A- 6 068 440

## Beschreibung

### TECHNISCHES GEBIET DER ERFINDUNG

Das Gebiet der Erfindung betrifft Sicherungseinrichtungen zur Sicherung von austauschbaren Ladungsbehältern, insbesondere zur Sicherung von austauschbaren Ladungsbehältem auf einem Transportfahrzeug oder einem Transportfahrzeuganhänger. Zudem werden hierin Transportfahrzeug oder Transportfahrzeuganhänger mit derartigen Sicherungseinrichtungen zur Aufnahme von austauschbaren Ladungsbehältern offenbart.

### HINTERGRUND DER ERFINDUNG

Ladungssicherungen auf Strassenfahrzeugen dienen zur Sicherung der Ladung während der Fahrt. Die Art der Ladungssicherung hängt meist von der Grösse und dem Volumen der Ladung ab. Zur einfacheren Handhabung verschiedenster Transportgüter werden häufig austauschbare Ladungsträger als um oder abschliessende Ladehilfsmittel verwendet Solche Ladungshilfsmittel sind z.B. Wechselbehälter, Iso-Container, Binnencontainer, Kipp- und Absetzbehälter, die zwecks Beladung und gegebenenfalls Entladung abgesetzt oder abgestellt werden. Fliess-, Schütt- und/oder Stückgüter der unterschiedlichsten Art sowie ihrer Mischformen (z.B. Abfallstoffe, Wertstoffe und Bauschutt) werden zweckmässigerweise in Kipp- und Absetzbehältem transportiert.

Für austauschbare Ladungsträger werden zum Transport Lastkraftwagen und ihre Anhänger mit Spezialaufbau für die Aufnahme eingesetzt. Die Ladungsträger werden für den Transport auf dem Transportfahrzeug durch besondere Einrichtungen sicher gehalten. Sicherungseinrichtungen zur Sicherung von austauschbaren Ladungsträgern müssen den möglichen Beanspruchungen im Fahrbetrieb standhalten, und dafür sorgen, dass beim verkehrsüblichen Betrieb, ein Verschieben oder Herabfallen der Ladungsträger nicht zu erwarten ist. Neben der Sicherheit ist auch ein speditives einfaches Auf- und Abladen von zentralem Interesse.

Bekannte Ladungssicherungssysteme von austauschbaren Ladungsträgern umfassen Sicherungen für Absetzbehälter, welche gegen ein Verrutschen in Fahrzeuglängsrichtung, d.h. nach vorne oder nach hinten, und in Querrichtung, d.h. zur Seite hin, wirken. Es handelt sich hierbei für gewöhnlich um Sicherungen durch Formschluss und/ oder durch Zurrmittel.

Zur Sicherung in Fahrtrichtung werden heute Frontanschläge auf der Ladefläche eines Transportfahrzeugs verwendet, welche Frontanschläge gegebenenfalls ausnehmbar und in ihrer Lage verstellbar sind. Derartige Frontanschläge bestehen zumindest aus einer Anschlagplatte, welche in einem Winkel von der Ladefläche absteht. Beim Beladen einer Ladefläche wird der Fuss eines austauschbaren Ladungsträgers (z.B. Mulde) zur Anschlagplatte geführt. Dadurch dass die Anschlagplatte über eine Auflagefläche (z.B. die Ladefläche) absteht, wird ein Vorrutschen des Ladungsträgers z.B. beim Bremsen verhindert. Dieser bekannte Frontanschlag bietet jedoch keine Sicherheit gegen ein Abrutschen nach hinten. Hierfür müssen andere, zusätzliche Sicherungen eingesetzt werden.

Aus Patentschrift US 4 058 231 ist ein Transportfahrzeug mit Kettenzug bekannt. Die Zugketten besitzen Greifhaken mit Keil zum Einhängen in die Lagerbolzen und Aufziehen eines Containers. Der Container wird mit den Lagerbolzen bis zum Anschlag gezogen. In dieser Position bieten starre, über die Lagerbolzen hinweg reichende Sicherungselemente beim Transport zusätzlichen Schutz vor Verrutschen der Ladung.

Patentschrift US 3 857 504 offenbart einen Seilabroller mit zwei Haken, welche auf der Ladefläche montiert sind. Die Haken werden durch eine Feder in Offenstellung gehalten. Sobald jedoch durch Anstossen eines Lagerbolzens eine Kraft auf den nockenarti gen Hakenbauch drückt, dreht sich der Haken ein, um den Bolzen zu greifen. Ein Verriegelungsstift blockiert den Haken in Greifposition. Die Entriegelung wird manuell durch Herausziehen des Stiftes bewerkstelligt.

Ein weiterer Seilabroller wird in der Patentschrift US 3 399 795 offenbart. Hier wird der Lagerbolzen eines Wechselcontainers durch einen Haken unter Federkraft gefasst. Entriegelung wird hier von Hand per Hebel bewerkstelligt.

Mit Dokument US 6 068 440 wird eine Schwerkraftsicherung für einen Seil-Abrollcontainer offenbart. Der Schliessmechanismus beinhaltet eine bewegliche Platte. Bei abgesetzter, horizontaler Ladefläche, d.h. in Transportposition, wird die bewegliche Platte durch Hochpressen in einer Verschlussposition gehalten. Ein vorzugsweise hakenartiger Anschlag kooperiert mit dem Schliessmechanismus. Beim Hochstellen der Ladefläche dreht sich die bewegliche Platte in Abhängigkeit der Position der Ladefläche gravitätsgetrieben aus ihrer Verschlussposition um einen Fuss des Seil-Abrollcontainers freizugeben bzw. aufnehmen zu können. Eine Entriegelung findet nur beim Hochfahren der Ladefläche in eine schräge Ent- bzw. Beladeposition der Ladefläche statt.

In Dokument EP 1 661 755 wird eine Ladungssicherungseinrichtung für einen Absetzkipper beschrieben. Die Ladungssicherungseinrichtung weist ein Verriegelungselement mit Verriegelungsmaul auf, wobei das Verriegelungselement relative zum Ladeboden zwischen einer Verriegelungsstellung und einer Entriegelungsstellung linear verschiebbar geführt ist und mit einer Sicherungsklinke zum Öffnen und Schliessen des Verriegelungsmauls ausgestattet ist. Dieses Verriegelungselement nimmt einen Kipplagerbolzen eines Wechselbehälters beim Übergang von der Entriegelungsstellung in die Verriegelungsstellung verriegelnd in Eingriff. Zum Entriegeln muss erst die Sicherungsklinke abgezogen und dann das Verriegelungsmaul weggestossen werden. Die Antriebseinrichtung für die Ladungssicherungseinrichtung umfasst einen hydraulischen Zylinder und/ oder einen Elektromotor als steuerbares Antriebsmittel.

Den genannten Sicherheitssystemen der Dokumente US 3 857 504 , US 3 399 795, EP 1 661 755 und US 6 068 440 ist gemeinsam, dass zum Abladen des Wechselcontainers erst ein Entriegeln der Sicherung nötig ist. Gemäss dem Systems in US 6 068 440 muss hierzu der Container zusätzlich erheblich aus seiner horizontalen Transportlage gekippt werden. Gemäss den System in US 3 399 795, EP 1 661 755 und US 3 857 504 muss die Entriegelung aktiv durch den Fahrer oder einen anderen Bediener vorgenommen werden.

### AUFGABE

Es ist Aufgabe der vorliegenden Erfindung, eine Sicherungseinrichtung bereitzustellen, welche die Sicherung von Transportladungen verbessert. Neben einer verbesserten Sicherung soll gleichzeitig ein einfaches, speditives Auf- und Abladen gewährleistet werden. Insbesondere ist es Aufgabe der vorliegenden Erfindung eine Sicherungseinrichtungen zur Sicherung austauschbarer Ladungsbehältern bereitzustellen. Weiter ist es Aufgabe der vorliegenden Erfindung ein sicheres Be- und Entladen von Kipp- und Absetzbehältem für Teleskopabsetzkipper, Knickarmabsetzkipper und/oder Starrarmabsetzkipper zu ermöglichen.

### BESCHREIBUNG

Diese und andere Ziele werden durch die Merkmale der unabhängigen Patentansprüche erreicht. Weiterbildungen und/oder vorteilhafte Ausführungsvarianten der Erfindung sind Gegenstand der abhängigen Patentansprüche.

Die Erfindung bezieht sich auf eine Sicherungseinrichtung zur Sicherung von austauschbaren Ladungsbehältern, insbesondere zur Sicherung von austauschbaren Ladungsbehältern auf einem Transportfahrzeug oder einem Transportfahrzeuganhänger, wie z.B. einem Absetzkipper. Die Sicherungseinheit beinhaltet einen Anschlag für den Ladungsbehälter, insbesondere z.B. für dessen Fuss, und eine Stützstruktur, welche Stützstruktur den Anschlag trägt, wobei an bzw. in der Stützstruktur ein bewegliches Verriegelungselement angeordnet ist. Das Verriegelungselement lässt sich zwischen einer Passierposition und einer Sperrposition bewegen. Während der Anschlag ein Verrutschen nach vorne (d.h. in Richtung zum Anschlag hin) verhindert, blockiert das Verriegelungselement ein Abrutschen des Ladungsbehälters (z.B. Mulde) nach hinten (d.h. vom Anschlag weg). Das Verriegelungselement bietet ein keilartiges Hindernis, welches einem Abrutschen entgegenwirkt.

Aufgrund einer nach oben offenen Anordnung von Anschlag und Verriegelungselement (insb. einer nach oben ungesicherten Anordnung) ist zum Entladen kein Entriegeln nötig. Der Wechselcontainer eines Absetzkippers kann dadurch einfach hochgehoben werden bzw. aus der Sicherungseinheit (insbesondere in ungefähr vertikaler Richtung) herausgehoben werden. Ein Entladen ist somit ohne vorheriges Entriegeln in der Sperrposition des Verriegelungselements möglich. Die nach oben orientierte Öffnung ist insbesondere breiter als der Durchmesser eines Ladungsbehälterfusses bzw. Ladungsbehälterbolzens, sodass der Wechselcontainer zum Abladen einfach aus der Sicherungseinrichtung herausgehoben werden kann, während die Sicherungseinrichtung in verriegeltem Zustand verbleibt.

Die im Folgenden angeführten vorteilhaften Ausführungsvarianten führen allein oder in Kombination miteinander zu weiteren Verbesserungen der genannten Sicherungseinrichtung.

Das bewegliche Verriegelungselement lässt sich vorteilhafterweise zwischen einer ersten und zweiten Position bewegen. Insbesondere lässt sich das Verriegelungselement zwischen einer Sperrposition vor dem Anschlag und einer in Bezug auf die Sperrposition tiefer gesetzte Passierposition bewegen. In einer ersten Position (der Sperrposition) steht das Verriegelungselement bevorzugt unter Vorspannung über die Ladeebene des Transportfahrzeugs oder dessen Anhängers hervor und wirkt als Hindernis gegen ein Verrutschen des Behälterfusses nach hinten (d.h. in Bezug auf das Fahrzeug oder dessen Ladefläche nach hinten). In einer zweiten Position (der Passierposition) ist das Verriegelungselement unter die Ladeebene gesenkt (insb. gedrückt), um beim Aufladen des Ladungsbehälters diesem keinen Wiederstand zu bieten. Bevorzugterweise ist das Verriegelungselement derart ausgebildet, dass dieses beim Aufladen des Ladungsbehälters äusserem Druck bzw. dem Gewicht des Ladungsbehälters nachgibt und den Weg zum Anschlag hin freigibt. Sobald der Behälterfuss über das Verriegelungselement geglitten ist, kann das Verriegelungselement wieder nach oben fahren, um den Ladungsbehälter zu blockieren, insbesondere um den Ladungsbehälter zwischen Anschlag und Verriegelungselement zu blockieren.

Das bewegliche Verriegelungselement kann in einer Aussparung der Stützstruktur angeordnet sein. In der Sperrposition ragt das Verriegelungselement aus der Aussparung hervor (insbesondere über die Ladeebene), während in der Passierposition das Verriegelungselement in die Aussparung (insbesondere unter die Ladeebene) gedrückt wird. In der ersten Position (d.h. der Sperrposition) steht das Verriegelungselement bevorzugt unter Vorspannung aus der Aussparung hervor und wirkt als Hindernis gegen ein Verrutschen des Behälterfuss nach hinten. In der zweiten Position (d.h. der Passierposition) ist das Verriegelungselement in der Aussparung versenkt, um beim Aufladen des Ladungsbehälters diesem keinen Wiederstand zu bieten.

Wahlweise beinhaltet die Sicherungseinheit zusätzlich eine Auflage. Die Sicherungseinheit beinhaltet somit eine Auflage, einen Anschlag, welche an die Auflage anschliesst, und eine Stützstruktur, welche die Auflage und den Anschlag trägt, wobei in einer Aussparung der Auflage ein bewegliches Verriegelungselement angeordnet ist. Die Auflage kann als Auflagefläche und der Anschlag als Anschlagsfläche ausgebildet sein. Gegebenenfalls können Auflage und/oder Anschlag als Steg, i.e. Auflagesteg bzw. Anschlagssteg, ausgebildet sein.

Vorteilhafterweise wirkt das Verriegelungselement mit zumindest einem Kraftorgan zusammen und wird gegebenenfalls durch das Kraftorgan auf einer Sperrposition gehalten. Das zumindest eine Kraftorgan ist zweckmässigerweise ausgewählt aus der Gruppe bestehend aus Federkraftorganen, z.B. Federn, insbesondere Spiralfedern, pneumatischen und hydraulischen Kraftorganen, insbesondere pneumatischen und hydraulischen Druckeinrichtungen. Alternativ kann das Verriegelungselement derart ausgebildet sein, dass es sich aufgrund seiner Lage und seiner Schwerkraft auf die Ausgangsposition zurückbewegt, sobald eine äussere Krafteinwirkung auf das Verriegelungselement wegfällt. Das Kraftorgan kann somit eine Gewichtsmasse darstellen, welche z.B. als Gegengewicht zum Verriegelungselement wirkt, d.h. welche gegen die Schwerkraft des Verriegelungselements wirkt. Im Weiteren sind auch Kombinationen der verschiedenen Kraftorgane möglich.

Besonders Vorteilhaft ist die Benutzung einer Feder als Kraftorgan. Aufgrund der Federkraft springt das Verriegelungselement automatisch hoch. Die Ladung wird dadurch selbsttätig gesichert, ohne das Zutun eines Bedieners nötig ist. Insgesamt ist ein derartiges Sicherungssystem mit Feder einfach, robust und wartungsarm.

Das zumindest eine Kraftorgan erzeugt gegebenenfalls eine Vorspannung. Der Fuss eines Ladungsbehälters kann aufgrund seines Gewichts beim Aufladen das Verriegelungselement wegdrücken. Sobald der Fuss das Verriegelungselement freigibt, bewegt sich dieser unter Wirkung des Kraftorgans zurück auf seine Ausgangsposition.

Anschlag und Verriegelungselement sind vorteilhafterweise voneinander beabstandet. In der Sperrposition sind Anschlag und Verriegelungselement derart voneinander beabstandet, dass ein Behälterfuss im Zwischenraum, welcher von Anschlag und Verriegelungselement aufgespannt ist, auf oder über der Stützstruktur (d.h. insbesondere auf oder über einer Auflage) aufgenommen werden kann. Anschlag und Verriegelungselement in Sperrposition bilden einen Zwischenraum, welcher den Abmessungen eines Behälterfusses (insbesondere dem Durchmesser eines Behälterfusses) angepasst ist, wobei vorteilhafterweise eine gewisse Toleranz mitberücksichtigt ist. Ist eine Aussparung vorhanden so ist diese bevorzugt vom Anschlag beabstandet

Das Verriegelungselement ist vorteilhafterweise als Klappe oder als Schieber ausgeführt. Als Klappe ausgebildet kann das Verriegelungselement über einen Drehpunkt aus der Aussparung ausklappen. Hierzu ist das Verriegelungselement gegebenenfalls um eine Achse verschwenkbar.

Als Schieber ausgeführt kann das Verriegelungselement über eine lineare oder gekrümmte Schiebebewegung aus der Aussparung austreten. Hierzu ist das Verriegelungselement gegebenenfalls entlang einer Führung verschiebbar.

Zweckmässigerweise weist das Verriegelungselement einen vorspringenden, keilartigen Teil auf, welcher eine erste und eine zweite Funktionsfläche beinhaltet, welche Funktionsflächen gegeneinander abgewinkelt eine Scheitellinie bilden. Die Scheitellinie verläuft im Wesentlichen horizontal und parallel zum Anschlag. Die zweite Funktionsfläche schliesst an die erste Funktionsfläche an und zumindest bei ausgefahrenem Verriegelungselement (d.h. in Sperrposition) ist die erste Funktionsfläche zum Anschlag hin gerichtet, während die zweite Funktionsfläche dem Anschlag abgewandt ist. In Gleitrichtung, insbesondere vom Verriegelungselement (gegebenenfalls von der Auflage) auf den Anschlag zu, ist die genannte zweite Funktionsfläche bevorzugt länger als die genannte erste Funktionsfläche.

Das Verriegelungselement ist bevorzugt vorgespannt und aus dieser Position absenkbar. Inbesondere unter äusserem Druck auf die zweite Funktionsfläche ist das Verriegelungselement absenkbar. Gegebenenfalls kann das Verriegelungselement in Richtung zur Auflage bis auf das Niveau der Stützstruktur (bzw. bis auf das Niveau der Auflage) abgesenkt werden. Bei fehlendem äusserem Druck auf die zweite Funktionsfläche steht die erste Funktionsfläche dem Anschlag gegenüber (Sperrposition), sodass eine Senke bzw. ein Zwischenraum zwischen Anschlag und Verriegelungselement ausgebildet ist. Die Anschlagfläche, gegebenenfalls die Stützstruktur oder Auflagefläche und die erste Funktionsfläche bilden vorteilhafterweise eine U-förmige Senke zwischen Anschlag und Verriegelungselement. In einer beispielhaften Ausgestaltung verläuft der erste Schenkel der U-förmigen Senke, welcher durch die erste Funktionsfläche gebildet wird, weniger steil als der zweite Schenkel, welcher durch die Fläche des Anschlags gebildet wird.

Der vorteilhafte Steigungswinkel der ersten Funktionsfläche in der Sperrposition liegt im Bereich von ungefähr 30° bis 100°, bevorzugt im Bereich von ungefähr 45° bis 90°. Weiter vorteilhaft ist ein Steigungswinkel von 70 ±10 Grad, noch weiter bevorzugt ist ein Steigungswinkel von 70 ±5 Grad. Anders Ausgedrückt ist die erste Funktionsfläche bei ausgefahrener Position des Verriegelungselements vorteilhafterweise von der Senkrechten abgeneigt, und zwar bevorzugt um 20 ±15 Winkelgrad, weiter bevorzugt um 20 ±10 Winkelgrand, besonders bevorzugt um 20 ±5 Winkelgrad. Das heisst, dass die U-förmige Senke zumindest zum Verriegelungselement hin sich nach oben hin zunehmend öffnet bzw. verbreitert.

Bevorzugterweise liegt in der Sperrposition der Steigungswinkel der zweiten Funkti onsfläche bei maximal 60°, weiter bevorzugt im Bereich von 20 bis 50 Grad, weiter bevorzugt maximal 30 ±5 Grad, weiter bevorzugt bei ungefähr 30 ±5 Grad.

Zweckmässigerweise schliesst der Anschlag (113, 213, 313) mit einer Horizontalen Ebene einen Öffnungswinkel im Bereich von 60 bis 120 Grad, bevorzugt von 80 bis 100 Grad, weiter bevorzugt von ungefähr 90 ±5 Grad. Insoweit eine Auflage mit ungefähr horizontal ausgebildeter Auflagefläche vorhanden ist, bilden der Anschlag und die Auflage einen Öffnungswinkel im Bereich von 60 bis 120 Grad, bevorzugt von 80 bis 100 Grad, weiter bevorzugt von ungefähr 90 ±5 Grad, ein. Die Auflage bzw. Auflagefläche ist bevorzugt im Wesentlichen horizontal ausgerichtet.

Die erste und die zweite Funktionsfläche (als Schenkelflächen) bilden zweckmässigerweise an der Scheitellinie eine Kante mit einem Winkel im Bereich von 60 bis 100 Grad, bevorzugt von 70 bis 90 Grad, weiter bevorzugt von 80 ±5 Grad. Diese Kante kann auch abgerundet sein, sodass die Scheitellinie eine virtuelle Linie ist.

Die erste und/oder die zweite Funktionsfläche sind vorteilhaft als ebene Flächen, d.h. als Ebenen, ausgebildet. Alternativ können die Funktionsflächen auch als gekrümmte Flächen ausgebildet sein. Zum Beispiel können die erste und/ oder die zweite Funktionsfläche am Verriegelungselement konvex ausgebildet sein. Die Krümmungsrichtung steht zweckmässigerweise senkrecht zur Scheitellinie. Die Scheitellinie ist somit im Wesentlichen eine Gerade auch wenn eine oder beide Funktionsflächen gekrümmt sind.

Das Verriegelungselement weist zweckmässigerweise einen Finger bzw. Vorsprung auf, welcher den Weg (bzw. die Bewegung) des Verriegelungselements (insbesondere bei dessen Vortrittsbewegung) begrenzt. Beispielsweise kann das Verriegelungselement neben dem vorspringenden, keilartigen Teil einen versteckten Teil aufweisen, welcher in der Stützstruktur oder zwischen Stützstrukturteilen (gegebenenfalls unter der Auflage) liegt, wobei dieser versteckte Teil zumindest einen Vorsprung bzw. Fin ger enthält, welcher in der Stützstruktur (bzw. unterhalb der Auflage) über den Rand der Aussparung ragt und dadurch die Vortrittsbewegung des Verriegelungselements beschränkt. Ausgebildet als Klappe weist das Verriegelungselement zumindest einen derartigen Vorsprung bzw. Finger auf. Ausgebildet als Schieber weist das Verriegelungselement bevorzugt zumindest zwei derartige Vorsprünge bzw. Finger auf, welche in zwei entgegengesetzte Richtungen abstehen.

Zweckmässigerweise kann die Sicherungseinrichtung einteilig oder mehrteilig ausgeführt sein, wobei bei der mehrteiligen Ausführung ein erstes Teil den Anschlag beinhaltet und ein zweites Teil das Verriegelungselement beinhaltet.

Die Erfindung bezieht sich weiter auf ein Transportfahrzeug und gegebenenfalls auf einen Transportfahrzeuganhänger, insbesondere einen Lastkraftwagen und dessen Anhänger, zur Aufnahme von austauschbaren Ladungsbehältern. Das Transportfahrzeug oder der Transportfahrzeuganhänger zeichnet sich dadurch aus, dass auf dessen Ladefläche zumindest eine Sicherungseinrichtung gemäss einem der vorhergehenden Ansprüche angebracht ist, insbesondere die Sicherungseinrichtung als Frontalanschlag angebracht ist. Zweckmässigerweise ist die Sicherungseinrichtung derart ausgerichtet, dass die Anschlagsfläche des Anschlags zum Fahrzeugende gerichtet ist.

Die zumindest eine Sicherungseinrichtung kann herausnehmbar und/ oder verstellbar oder fest (d.h. fix) angebracht sein. Eine herausnehmbare Sicherungseinrichtung lässt sich entfernen und wieder einsetzen, ist also auswechselbar. Eine verstellbare Sicherungseinrichtung lässt sich zumindest von einer ersten Position in eine zweite Position verstellen. Eine fix angebrachte Sicherungseinrichtung ist fixiert und wird auch bei andersartiger Nutzung der Ladefläche nicht entfernt. Alternativ kann die zumindest eine Sicherungseinrichtung teilweise fix angebracht sein, wobei lediglich ein Teil der Sicherungseinrichtung fest ist, während ein anderer Teil herausnehmbar und/oder verstellbar ist.

Gegebenenfalls sind Sicherungseinrichtung und Lastfläche des Fahrzeugs oder Anhängers derart ausgebildet, dass die zumindest eine Sicherungseinrichtung zumindest in zwei Positionen verstellbar und/oder auswechselbar angebracht werden kann - zum Einen z.B. in einer ersten lastaufnehmenden (Betriebs-)Position, zum Anderen z.B. in einer zweiten Lager- oder Verstauposition.

Die lastaufnehmende Position zeichnet sich dadurch aus, dass ein Ladungsbehälter, wie z.B. eine Bauschuttmulde, auf dem Transportfahrzeug oder Transportfahrzeugan hänger derart durch die Sicherungseinrichtung befestigt bzw. aufgenommen werden kann, dass der Ladungsbehälter auch unter Transportbedingungen nicht verrutscht oder gar vom Transporter fällt. In der Betriebsposition lässt sich ein Ladungsbehälter also mit der genannten Sicherungseinrichtung sichern. Die Verstauposition ist dadurch gekennzeichnet, dass die Sicherungseinrichtung lediglich zur Mitfuhr sicher verstaut und gegebenenfalls befestigt ist und somit nicht verloren gehen kann. In der Verstauposition ist die Sicherungseinrichtung vorteilhafterweise von der anders nutzbaren Ladefläche zurückgesetzt oder entfernt.

Alternativ kann die Stützstruktur zumindest teilweise integraler Teil der Ladefläche sein. In einer Ausführungsform ist der Anschlag integraler Teil der Ladefläche, das Verriegelungselement jedoch ist herausnehmbar angeordnet. In einer anderen Ausführungsform ist das Verriegelungselement integraler Teil der Ladefläche, der Anschlag jedoch ist verstellbar und/oder herausnehmbar angeordnet. In einer weiteren Ausführungsform sind der Anschlag und das Verriegelungselement integraler Teil der Ladefläche.

Die Erfindung bezieht sich weiter auf die Verwendung von hierin aufgezeigten Sicherungseinrichtungen zur Sicherung von austauschbaren Ladungsbehältern auf Absetzkippern, insbesondere Teleskopabsetzkippern, Knickarmabsetzkippern und/oder Starrarmabsetzkippern. Den Absetzkippern ist insbesondere gemein, dass die Ladefläche bei Transport, Laden und Entladen im Wesentlichen horizontal ausgebildet ist bzw. bleibt.

Zusätzliche Vorteile und Ziele der vorliegenden Erfindung ergeben sich aus der nachfolgenden Beschreibung.

### KURZBESCHREIBUNG DER FIGUREN

Ausführungsbeispiele der Erfindung werden nachfolgend anhand von schematischen Figuren aufgezeigt. Genannte vorteilhafte Merkmale können in beliebiger Kombination verwirklicht werden - soweit sie sich nicht gegenseitig ausschliessen. Es zeigen:
- Figur 1a:: eine erfindungsgemässe Sicherungseinrichtung mit Klappe in perspektivischer Ansicht (Sperrposition mit vorstehender Klappe);
- Figur 1b:: eine Seitenansicht der Einrichtung nach Fig. 1a;
- Figur 1c:: eine Rückansicht der Einrichtung nach Fig. 1a;
- Figur 1d: eine Unteransicht der Einrichtung nach Fig. 1a;
- Figur 1e: Schnitt A-A der Fig. 1d;
- Figur 1f: eine erfindungsgemässe Sicherungseinrichtung ähnlich Fig. 1a mit eingedrückter Klappe (Passierposition) in perspektivischer Ansicht;
- Figur 1g: eine Seitenansicht der Einrichtung nach Fig. 1f;
- Figur 1h: ein Schnitt der Einrichtung nach Fig. 1f bzw. ein Schnitt ähnlich der Fig. 1e, jedoch mit eingedrückter Klappe;
- Figur 1i: ein Ausschnitt einer Seitenansicht der Einrichtung in Fig. 1b;
- Figur 2a:: eine alternative erfindungsgemässe Sicherungseinrichtung mit Klappe zum Stecken in perspektivischer Ansicht (Sperrposition mit vorstehender Klappe);
- Figur 2b:: eine Seitenansicht der Einrichtung nach Fig. 2a;
- Figur 2c:: eine Vorderansicht der Einrichtung nach Fig. 2a;
- Figur 2d:: eine Rückansicht der Einrichtung nach Fig. 2a;
- Figur 2e: eine Unteransicht der Einrichtung nach Fig. 2a;
- Figur 2f: Schnitt A-A der Fig. 2e;
- Figur 2g: ein Schnitt ähnlich Fig. 2f, jedoch mit eingedrückter Klappe (Passierposition);
- Figur 3a:: eine weitere alternative erfindungsgemässe Sicherungseinrichtung mit Schieber zum Stecken in perspektivischer Ansicht (Sperrposition mit ausgefahrenem Schieber);
- Figur 3b:: eine Seitenansicht der Einrichtung nach Fig. 3a;
- Figur 3c:: eine Vorderansicht der Einrichtung nach Fig. 3a;
- Figur 3d:: eine Rückansicht der Einrichtung nach Fig. 3a;
- Figur 3e: eine Unteransicht der Einrichtung nach Fig. 3a;
- Figur 3f: Schnitt A-A der Fig. 3e;
- Figur 3g: ein Schnitt ähnlich Fig. 3f, jedoch mit eingeschobenem Schieber (Passierposition);
- Figur 4: Transportfahrzeug, insbesondere Teleskopabsetzkipper, mit Ladefläche und Sicherungseinrichtung.

### DETAILIERTE BESCHREIBUNG DER FIGUREN

### Eine erste Ausführung einer erfindungsgemässen Sicherungseinrichtung:

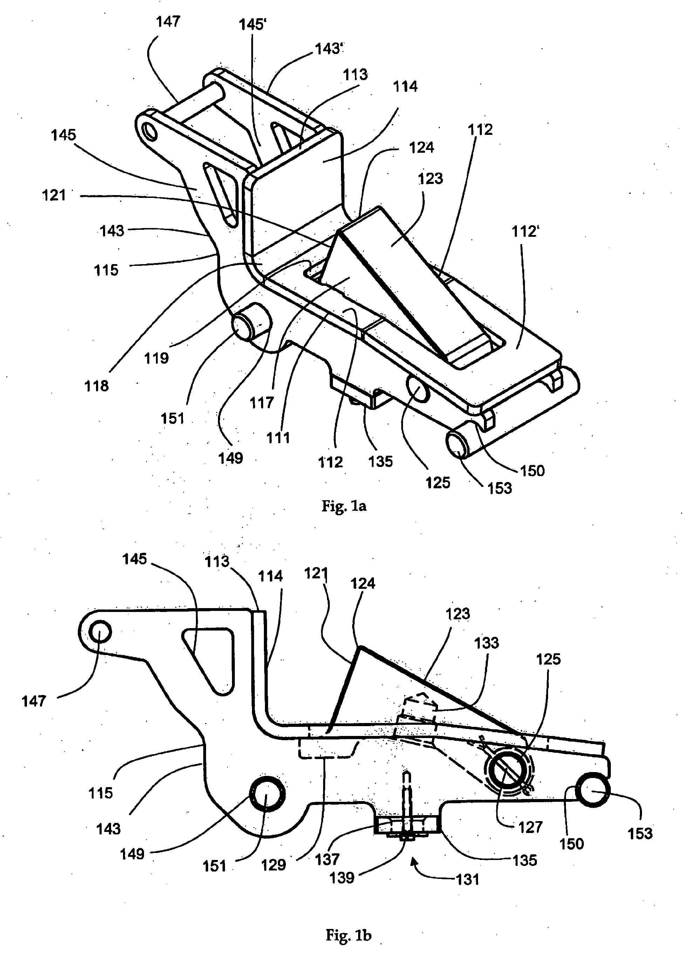

In den Figuren 1a bis 1h ist eine erst Ausführung einer Sicherungseinrichtung zur Sicherung von austauschbaren Ladungsbehältern auf Transportfahrzeugen bzw. Transportfahrzeuganhängern und insbesondere auf deren Ladeflächen dargestellt.

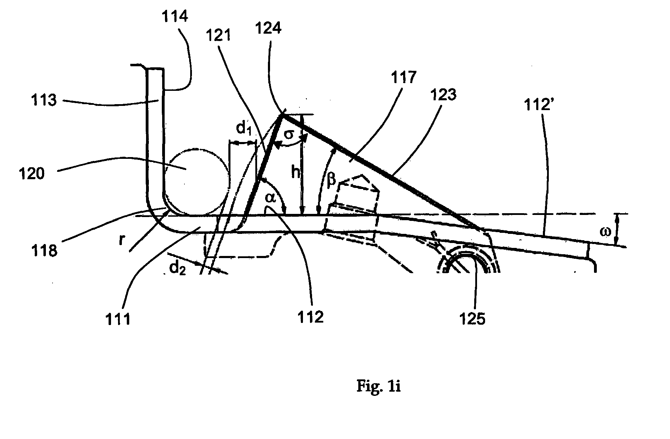

Die Sicherungseinrichtung weist einen Anschlag 113, eine Stützstruktur 115, eine Auflage 111, und ein bewegliches Verriegelungselement 117 auf (Fig. 1a). Die Auflage und/oder der Anschlag sind flächenartig ausgebildet, d.h. als Auflagefläche 112 bzw. Anschlagfläche 114. In der dargestellten Ausführung sind Auflage und Anschlag als eine oder mehrere Platten ausgeführt. In den vorliegenden Figuren sind die Auflagefläche 112 und Anschlagfläche 114 als Bestandteil einer einzelnen zurechtgebogenen Platte ausgeführt. Die Anschlagfläche kann plan oder auch gekrümmt sein. Alternativ ist denkbar, dass die Auflage und/oder der Anschlag durch einen oder mehrere Stege gebildet sind, welche auf der Stützstruktur 115 angebracht sind oder integral in der Stützstruktur 115 geformt sind. Auflage und/oder Anschlag können somit integrale Bestandteile der Stützstruktur sein. Auflage 111 und Anschlag 113 sind ungefähr im rechten Winkel gegeneinander geneigt, bzw. schliessen einen Winkelraum von ungefähr 90° ein. Geeignet sind auch Winkelweiten im Bereich von 90° ± 10°, insbesondere 90° ±5°. Wo sich Auflage 111 und Anschlag 113 treffen, bildet sich eine Innenkannte 118. Diese Innenkannte 118 kann als Radius (r) ausgebildet sein, wobei bevorzugt ist, dass dieser Radius (r) kleiner ist als jener eines aufzunehmenden Ladungsbehälterfusses 120, um optimale Sicherheit zu gewährleisten (Fig. 1i). Anschlag 113 und Verriegelungselement 117 sind derart voneinander beabstandet, dass ein Behälterfuss 120 im Zwischenraum, welcher von Anschlag 113 und Verriegelungselement 117 aufgespannt ist, über oder auf der Auflage 111 aufgenommen werden kann. Insbesondere sollte der genannte Zwischenraum genügend weit sein, sodass zwischen Behälterfuss 120 und Verriegelungselement 117 ein gewisser Abstand (d₁) verbleibt. Bevorzugt beträgt dieser Abstand z.B. ca.10-20 mm zur Verwendung eines Standardbehälters mit einem Behälterfuss einer Breite bzw. einem Durchmesser von ca. 40 mm.

Der Behälterfuss 120 kann auf der Auflage 111 berührend abgesetzt sein, er muss es aber nicht. Die Last bzw. die Hauptlast des Behälters wird vorteilhafterweise von der Ladefläche eines Transportfahrzeugs oder Transportfahrzeuganhängers an anderer Stelle getragen.

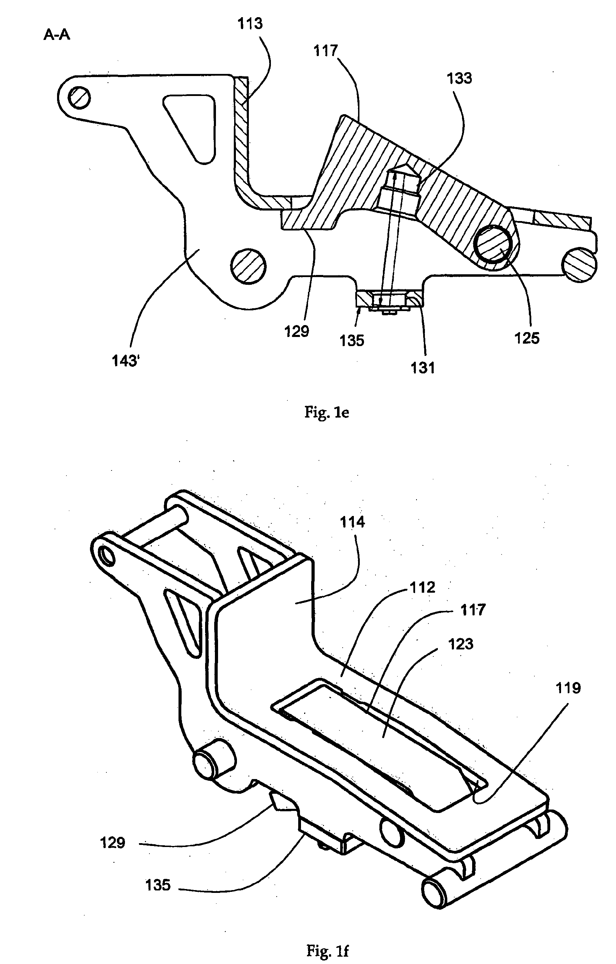

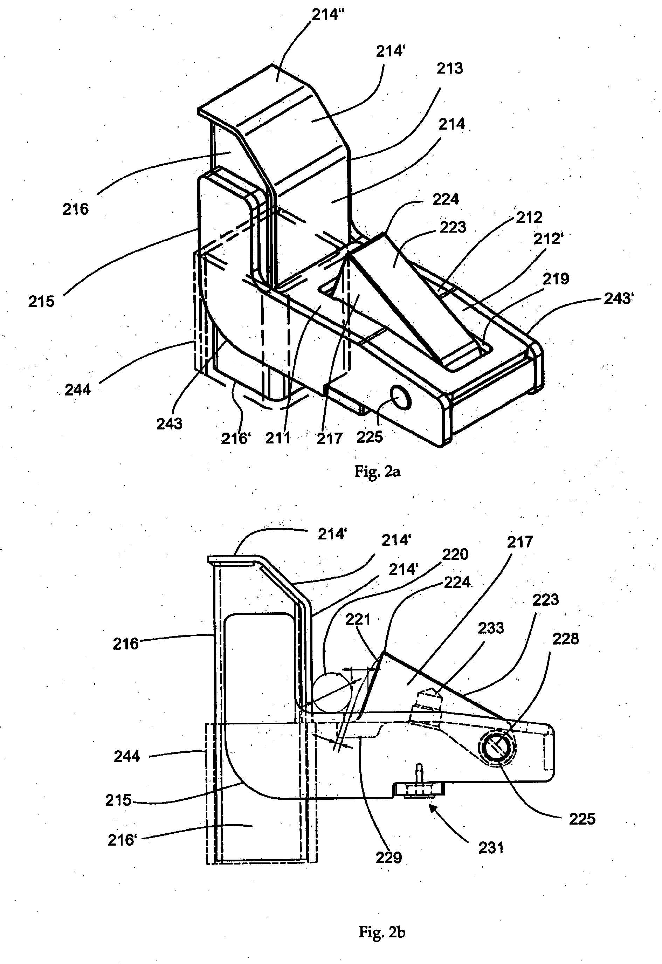

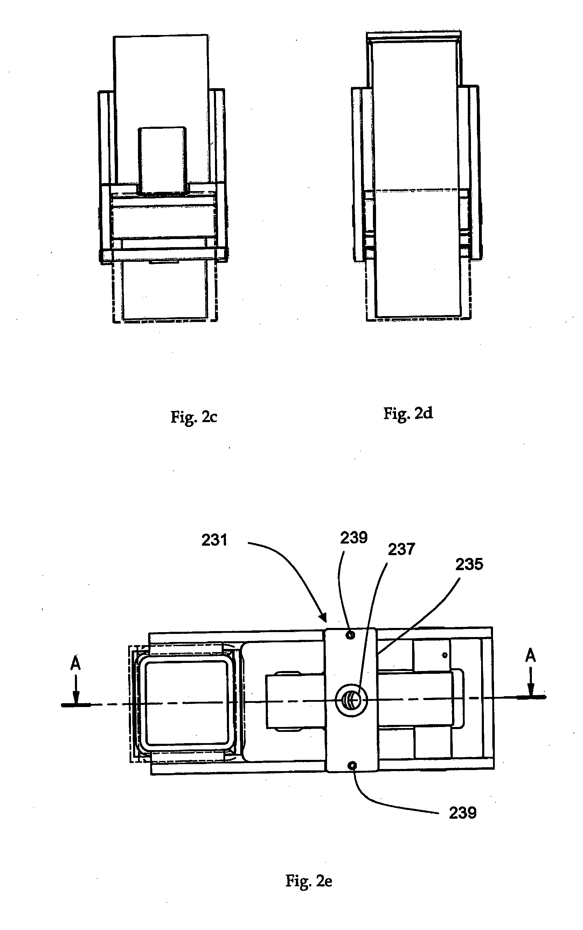

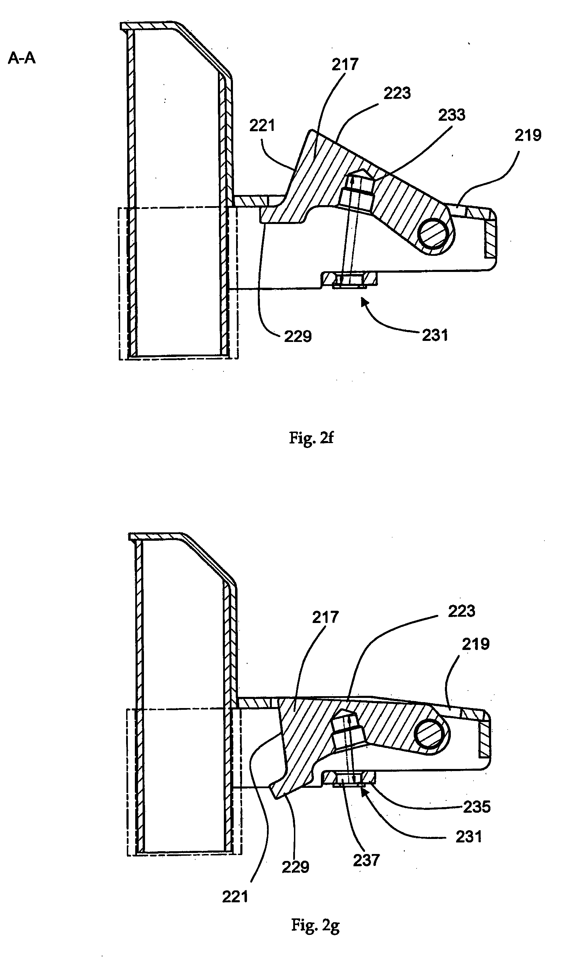

Die Auflage 111 kann sich mit zunehmendem Abstand vom Anschlag 113 gegenüber der Auflage 111 unmittelbar beim Anschlag 113 abneigen (in Fig. 1i wird dies durch den Winkel ω verdeutlicht). In einfacher Ausführung entspricht der Winkel ω gleich Null (ω = 0). Das Verriegelungselement 117 ist in einer Aussparung 119 der Auflage 111 beweglich eingelassen. Ein erster Teil des Verriegelungselements kann aus der Aussparung herausragen, während ein zweiter Teil unter der Auflage bleibt. Der erste Teil des Verriegelungselements besitzt zwei Funktionsflächen, d.h. eine erst 121 und eine zweite 123 Funktionsfläche. Die zwei Funktionsflächen sind voneinander abgeneigt und definieren dadurch eine Scheitellinie 124. Die Scheitellinie 124 ist hierbei ungefähr parallel zu Auflagefläche und Anschlagfläche. Die erste Funktionsfläche 121 und/oder die zweite Funktionsfläche 123 kann gerade oder gekrümmt ausgebildet sein. Bewegt sich das Verriegelungselement 117, dann bleibt die parallele Ausrichtung der Scheitellinie 124 zur Auflagefläche 112 und zur Anschlagfläche 114 zweckmässigerweise erhalten. Die erste Funktionsfläche 121 dient zur Blockierung einer möglichen Rutschbewegung eines Ladebehälters, d.h. blockiert auch unter externem Druck (insbesondere unter externem horizontalem Schiebedruck auf ihre Fläche). Die zweite Funktionsfläche dient als Angriffsfläche für einen externen Druck (insbesondere für einen externem horizontalem Schiebedruck auf ihre Fläche), aufgrund dessen das Verriegelungselement einsinkt und den Weg über die bzw. über der Auflagefläche freigibt. In seiner Sperrposition ragt das Verriegelungselement 117 mit seiner ersten Funktionsfläche 121 aus der Aussparung 119 heraus (Fig. 1a-1e). In einer anderen Position ist das Verriegelungselement 117 in der Stützstruktur versenkt; im Folgenden auch Senkposition genannt (Fig. 1f-1h). Ist das Verriegelungselement 117 in Senkposition, so reichen seine zweite Funktionsfläche 123 und die Scheitellinie 124 maximal bis auf das Niveau der Auflage 111, während der übrige Teil des Verriegelungselements 117 in der Stützstruktur unterhalb der Auflage 111 versenkt ist. Zumindest ein überstehender Finger 129 am Verriegelungselement 117 kann die Sperrposition definieren, indem der Finger 129 unterhalb der Auflage 112 über den Rand der Aussparung 119 ragt und dadurch ein weiteres Austreten des Verriegelungselements aus der Aussparung 119 verhindert. Gemäss dieser ersten Ausführungsform kann das Verriegelungselement 117 drehbar an der Stützstruktur befestigt sein. Hierbei wirkt zum Beispiel eine Achse 125, welche durch die Stützstruktur 115 und das Verriegelungselement 117 hindurchgeführt ist, als Drehachse. Ein Splint 127 kann zur Positionierung der Achse 125 verwendet sein (Fig. 2b). Der überstehende Finger 129 verhindert ein weiteres Ausdrehen des Verriegelungselements aus der Aussparung 119. Aufgrund dieser konstruktiven Ausführung funktioniert das Verriegelungselement 117 wie eine Klappe: es klappt aus oder ein indem es um einen Drehpunkt schwenkt. Zur optimalen Sicherung eines Fusses 120 eines Ladungsbehälters gemäss Fig. 1i ist der Abstand zwischen Anschlag 113 und Verriegelungselement 117 im Weiteren dadurch definiert, dass das Verriegelungselement 117 auch bei abgesetztem Fuss 120 einklappbar bzw. ausklappbar ist (dies ist in Fig. 1i durch Abstand d₂ verdeutlicht).

Das Verriegelungselement 117 wird durch ein Kraftorgan in seine Sperrposition geklappt bzw. insbesondere gedrückt oder gezogen. Die vorliegende erste Ausführung weist Haltemittel 131 und 133 auf, welche als Aufnahme für je ein Ende eines Kraftorgans (z.B. einer Feder) dienen (Fig. 1b). Ein solches erstes Haltemittel 131 ist an der Stützstruktur 115 z.B. in Form von einer Brücke 135 mit zentraler Bohrung 137 angelegt. Die Brücke ist zweckmässigerweise mit Schrauben 139 und gegebenenfalls einem Keilsicherungspaar befestigt. Ein zweites Haltemittel 133 ist am Verriegelungselement 117 z.B. in Form von einer Senkbohrung angelegt. Das Kraftorgan selbst, d.h. hier im Speziellen eine Feder, ist in den Figuren nicht dargestellt.

Die Stützstruktur 115 beinhaltet in der vorliegenden Ausführungsform zweckmässigerweise zwei gleichartige näherungsweise als L-Form ausgelegte Teilstrukturen 143 und 143', wobei diese beiden Teilstrukturen parallel beabstandet angeordnet sind, um die Auflage 111 und den Anschlag 113 zu beherbergen. Auflage 111 und Anschlag 113 sind jeweils mit beiden Teilstrukturen 143 und 143' verbunden. Hinter dem Anschlag 113 weist die Stützstruktur 115 verstärkende Verstrebungen 145 und 145' sowie eine Brückenverbindung 147 (hier als Bolzen ausgebildet) auf. Unter der Auflage 113 sind Aufnahmen 149 und 150 für einen ersten verlängerter Querbolzen 151 und einen zweiten verlängerter Querbolzen 153 ausgeformt.

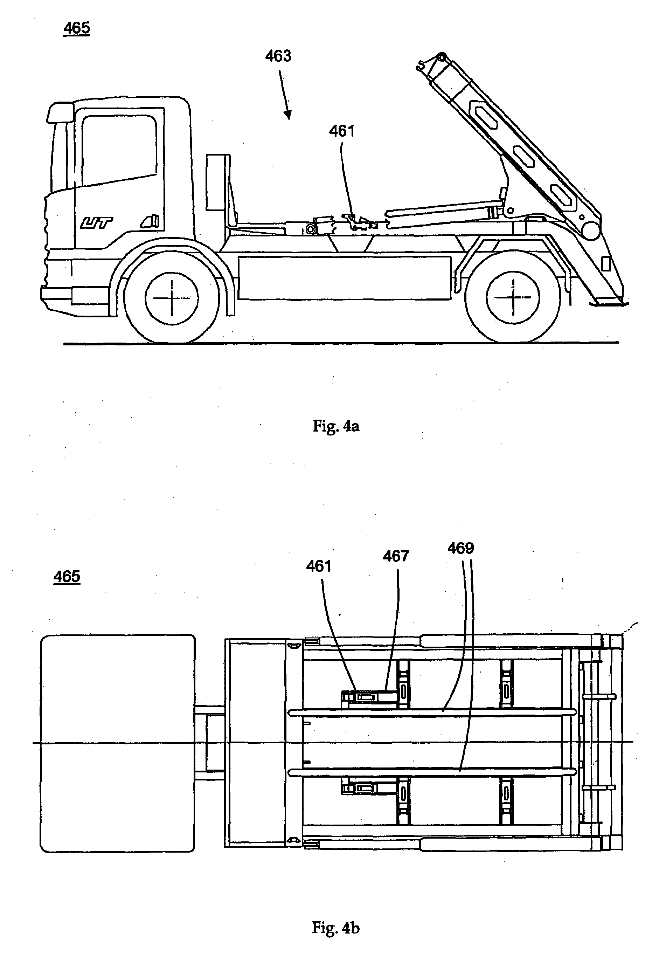

Die Sicherungseinrichtung dieser ersten Ausführungsform ist beispielhaft als herausnehmbares Anschlagsteil konzipiert. Querbolzen 151 und 153 in der Stützstruktur 115 dienen zum Einlassen der Sicherungseinrichtung in eine Aufnahme einer Ladefläche eines Transportfahrzeugs (z.B. einer Ladefläche 463 eines Transportfahrzeugs 465 gemäss Fig. 4).

Die Aufnahme kann als Ladeflächenvertiefung ausgeführt sein, welche Ladeflächenvertiefung in Fahrtrichtung verlaufende Innenwandungen aufweist, welche mit U-förmigen Senken und Rinnen, welche Senken und Rinnen die Querbolzen der Sicherungseinrichtung aufnehmen, ausgestattet sind. Die Sicherungseinrichtung kann als Anschlag für Wechselbehälter (d.h. austauschbare Ladungsbehälter, wie z.B. Mulden, Container und Presscontainer, Paletten oder andere Vorrichtungen mit geeigneten Fixierfüssen) genutzt werden, indem die Sicherungseinrichtung mit nach oben gerichteter Auflage 111 und vorstehendem Anschlag 113 in die Aufnahme eingelegt wird.

Wird die Sicherungseinrichtung nicht gebraucht, kann sie entfernt werden oder in eine Stauposition der Aufnahme umgelegt werden, insoweit die Aufnahme dafür ausgelegt ist. Auf diese Weise ist die lose Sicherungseinrichtung in einer Lagerposition verstaut und geht nicht verloren, wenn sie nicht gebraucht wird, ist aber jederzeit griffbereit auf der Ladefläche.

### Eine zweite Ausführung einer erfindungsgemässen Sicherungseinrichtung:

In den Figuren 2a bis 2g ist eine zweite Ausführung einer Sicherungseinrichtung zur Sicherung von austauschbaren Ladungsbehältern auf Transportfahrzeugen bzw. Transportfahrzeuganhängern und insbesondere auf deren Ladeflächen dargestellt.

Merkmale in den Figuren der zweiten Ausführung, welche mit jenen der ersten Ausführung übereinstimmen werden hier nicht unbedingt oder nicht in allen Details nochmals beschrieben. Diesbezüglich wird vielmehr auf die vorhergehende Beschreibung verweisen.

Die Sicherungseinrichtung der zweiten Ausführung weist einen Anschlag 213, eine Stützstruktur 215, eine Auflage 211 und ein bewegliches Verriegelungselement 217 auf (Fig. 2a). Die Auflage und/oder der Anschlag sind flächenartig ausgebildet, d.h. eine Auflagefläche 212 bzw. Anschlagfläche 214 beinhaltend. In der dargestellten Ausführung sind Auflage und Anschlag als Platten ausgeführt. In den vorliegenden Figuren sind die Auflagefläche 212 und Anschlagfläche 214 als Bestandteil zweier zurechtgebogener Platten ausgeführt. Der Anschlag 213 ist zudem als gekrümmte Platte mit zusätzlichen Führungsflächen 214' und 214" ausgebildet, welche sich nach oben hin vom Verriegelungselement 217 zunehmend abneigen, um ein sichereres Aufsetzen eines Lastbehälters gewährleisten zu können als dies vielleicht in der ersten Ausführung der Fall ist. Alternativ ist denkbar, dass die Auflage und/ oder der Anschlag auf eine andere konstruktive Art gelöst sind, wie z.B. durch einen oder mehrere Stege gebildet sind, welche auf der Stützstruktur 215 angebracht sind oder integral in der Stützstruktur 215 enthalten sind. Auflage und/oder Anschlag können somit integrale Bestandteile der Stützstruktur sein. Auflage 211 und Anschlag 213 sind ungefähr im rechten Winkel gegeneinander geneigt, bzw. schliessen einen Winkelraum von ungefähr 90° ein (wie oben für die erste Ausführung gezeigt). Die Auflage 211 kann sich mit zunehmendem Abstand vom Anschlag 213 gegenüber der Auflage 211 unmittelbar beim Anschlag 213 abneigen. Das Verriegelungselement 217 ist in einer Aussparung 219 der Auflage 211 beweglich eingelassen. Ein erster Teil des Verriegelungselements kann aus der Aussparung herausragen, während ein zweiter Teil unter der Auflage bleibt. Der erste Teil des Verriegelungselements besitzt zwei Funktionsflächen, d.h. eine erst 221 und eine zweite 223 Funktionsfläche. Die zwei Funktionsflächen sind voneinander abgeneigt und definieren dadurch eine Scheitellinie 224. Die Scheitellinie 224 ist hierbei ungefähr parallel zu Auflagefläche und Anschlagfläche. Bewegt sich das Verriegelungselement 217, dann bleibt die parallele Ausrichtung der Scheitellinie 224 zur Auflagefläche 212 und zur Anschlagfläche 214 zweckmässigerweise erhalten. In seiner Sperrposition ragt das Verriegelungselement 217 mit seiner ersten Funktionsfläche 221 aus der Aussparung 219 heraus (Fig. 2a-2f). In einer anderen Position ist das Verriegelungselement 217 in der Stützstruktur 215 (insbesondere zwischen den Teilstrukturen 243 und 243') versenkt; im Folgenden auch Senkposition genannt (Fig. 2g). Ist das Verriegelungselement 217 in Senkposition, so reichen seine zweite Funktionsfläche 223 und die Scheitellinie 224 maximal bis auf das Niveau der Auflage 211, während der übrige Teil des Verriegelungselements 217 in der Stützstruktur 215 unterhalb der Auflage 211 versenkt ist. Zumindest ein überstehender Finger 229 am Verriegelungselement 217 kann die Sperrposition definieren, indem der Finger 229 unterhalb der Auflage 212 über den Rand der Aussparung 219 ragt und dadurch ein weiteres Austreten des Verriegelungselements aus der Aussparung 219 verhindert. Wie schon in der ersten Ausführungsform kann auch in dieser zweiten Ausführungsform das Verriegelungselement 217 drehbar an der Stützstruktur befestigt sein. Hierbei wirkt zum Beispiel eine Achse 225, welche durch die Stützstruktur 215 und das Verriegelungselement 217 hindurchgeführt ist, als Drehachse. Ein Splint (hier nicht gezeigt) kann zur Positionierung der Achse 225 durch die Splintbohrung 228 geführt sein (Fig. 2b). Der überstehende Finger 229 verhindert ein weiteres Ausdrehen des Verriegelungselements aus der Aussparung 219. Aufgrund dieser konstruktiven Ausführung funktioniert das Verriegelungselement 217 wie eine Klappe: es klappt aus oder ein.

Das Verriegelungselement 217 wird durch ein Kraftorgan in seine Sperrposition geklappt bzw. insbesondere gedrückt oder gezogen. Die hier vorliegende zweite Ausführung weist ebenfalls Haltemittel 231 und 233 auf, welche als Aufnahme für je ein Ende eines Kraftorgans (z.B. einer Feder) dienen (Fig. 2b). Ein solches erstes Haltemittel 231 ist an der Stützstruktur 215 z.B. in Form von einer Brücke 235 gegebenenfalls mit einer zentralen Bohrung 237 angelegt (Fig. 2e-2g). Die Brücke ist zweckmässigerweise mit Schrauben 239 und gegebenenfalls einem Keilsicherungspaar befestigt. Ein zweites Haltemittel 233 ist am Verriegelungselement 217 z.B. in Form von einer Senkbohrung angelegt. Das Kraftorgan selbst, d.h. hier im Speziellen eine Feder, ist in den Figuren nicht dargestellt.

Die Stützstruktur 215 beinhaltet in der vorliegenden zweiten Ausführungsform zweckmässigerweise zwei gleichartige näherungsweise als L-Form ausgelegte Teilstrukturen 243 und 243', wobei diese beiden Teilstrukturen parallel beabstandet angeordnet sind, um die Auflage 211 und eine weitere Stützstruktur 216, 216' mit Anschlag 213 zu beherbergen. Die Auflage 211 ist mit beiden Teilstrukturen 243 und 243' verbunden. Die weitere Stützstruktur 216 ist hier als Steckprofil (insbesondere hier als Vierkantrohr) ausgeführt, welches zwischen den Teilstrukturen 243 und 243' aufgenommen ist und durch diese fixiert ist. Das Steckprofil 216 erstreckt sich nach oben über das Niveau der Auflage 211 und formt mit einer seiner Seiten den Anschlag 213 bzw. ist an jener seiner Seiten, welche zum Verriegelungselement 217 hin gerichtet ist, mit einer Platte belegt, welche als Anschlagfläche 212 dient. Das Steckprofil 216 erstreckt sich mit seinem Steckteil 216' vorzugsweise vertikal nach unten über die L-förmige Stützstruktur 215 hinaus, um ein Einstecken in ein Gegenstück 244, welches z.B. auf einer Ladefläche eines Transportfahrzeugs verankert ist, zu erlauben.

Die Sicherungseinrichtung dieser zweiten Ausführungsform ist also beispielhaft als herausnehmbares Anschlagsteil konzipiert. Das Steckprofil in der Stützstruktur 215 dient zum Einstecken der Sicherungseinrichtung in eine Aufnahme mit geeignetem Gegenstück einer Ladefläche eines Transportfahrzeugs.

Die Aufnahme kann als Ladeflächenvertiefung ausgeführt sein, welche Ladeflächenvertiefung ein Gegenprofil aufweist, welches das Steckprofil der Sicherungseinrichtung aufnehmen kann. Die Sicherungseinrichtung kann als Anschlag für Wechselbehälter genutzt werden, indem die Sicherungseinrichtung mit nach oben gerichteter Auflage und vorstehendem Anschlag in die Aufnahme eingesteckt wird.

Wird die erfindungsgemässe Sicherungseinrichtung nicht gebraucht, kann sie durch Ausziehen entfernt werden.

### Eine dritte Ausführung einer erfindungsgemässen Sicherungseinrichtung:

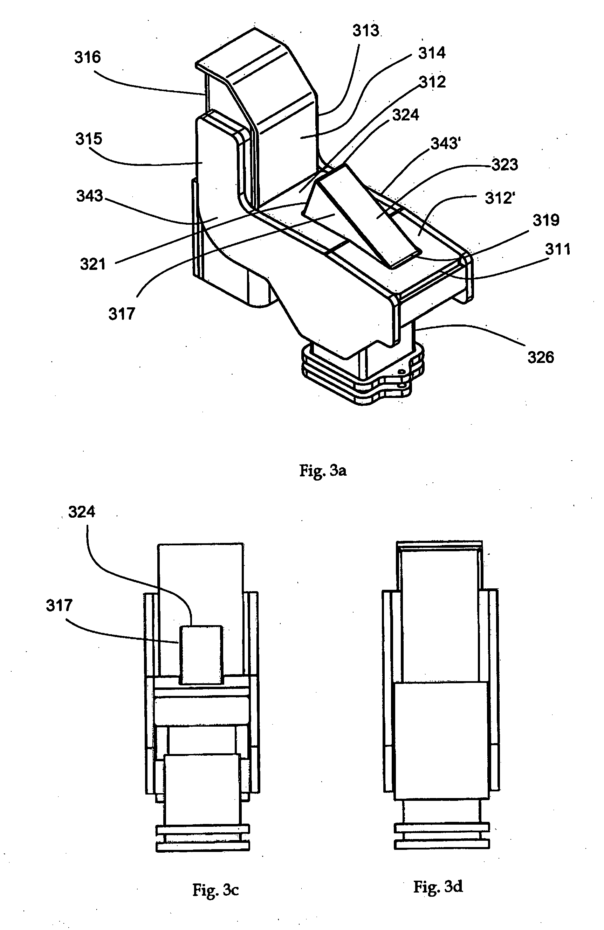

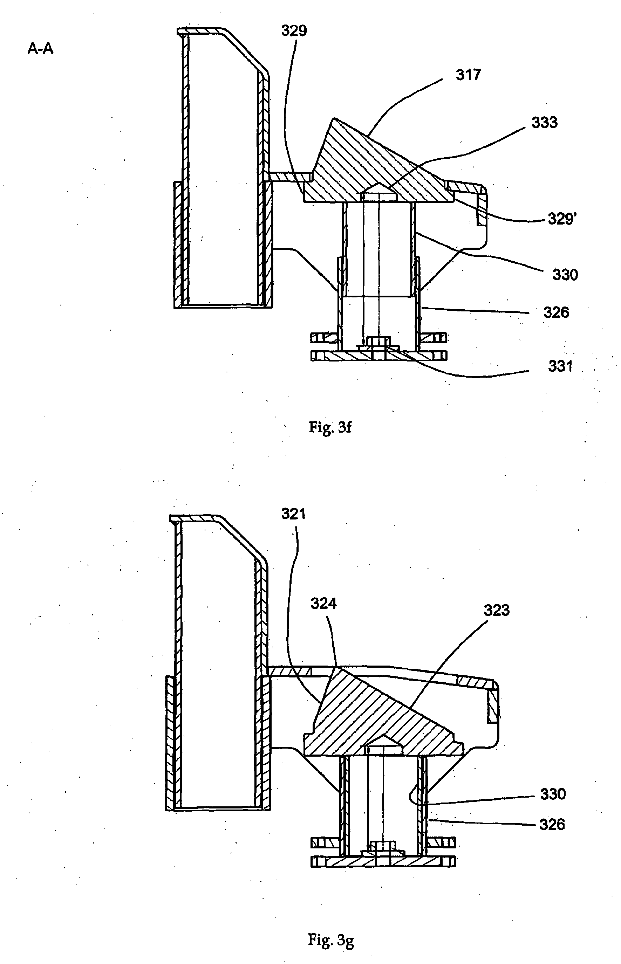

In den Figuren 3a bis 3g ist eine dritte Ausführung einer Sicherungseinrichtung zur Sicherung von austauschbaren Ladungsbehältern auf Transportfahrzeugen bzw. Transportfahrzeuganhängern und insbesondere auf deren Ladeflächen dargestellt.

Merkmale in den Figuren der dritten Ausführung, welche mit jenen der ersten oder zweiten Ausführung übereinstimmen werden hier nicht unbedingt oder nicht in allen Details nochmals beschrieben. Diesbezüglich wird vielmehr auf die vorhergehende Beschreibung verweisen.

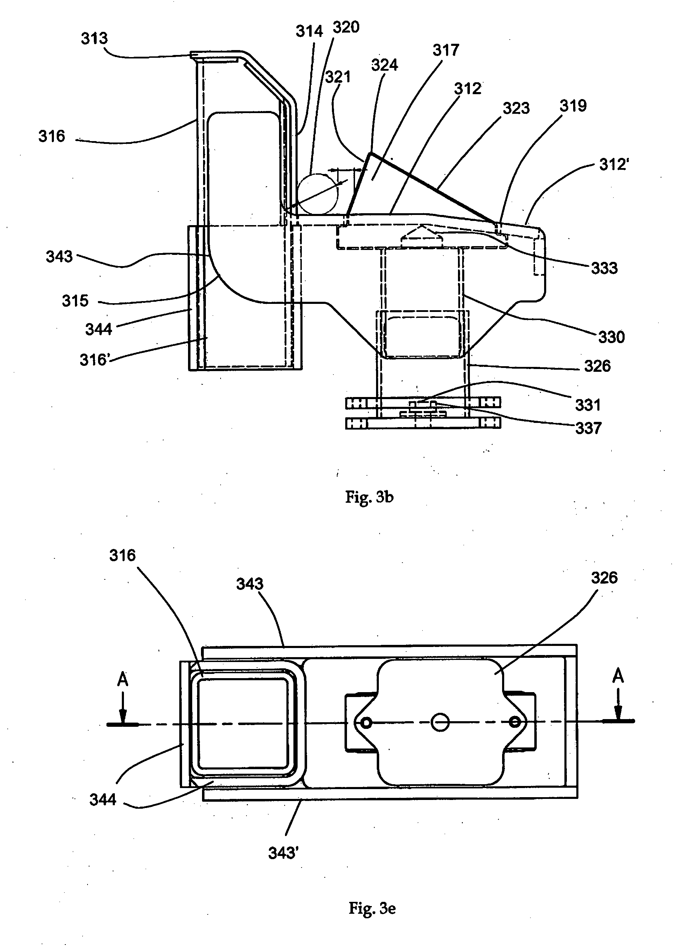

Die Sicherungseinrichtung der dritten Ausführung weist eine Auflage 311, ein Anschlag 313, eine Stützstruktur 315 und ein bewegliches Verriegelungselement 317 auf (Fig. 3a). Die Auflage und/oder der Anschlag sind flächenartig ausgebildet, d.h. eine Auflagefläche 312 bzw. Anschlagfläche 314 beinhaltend. In der dargestellten Ausführung sind Auflage und Anschlag als Platten ausgeführt. In den vorliegenden Figuren sind die Auflagefläche 312 und Anschlagfläche 314 als Bestandteil zweier zurechtgebogener Platten ausgeführt. Der Anschlag 313 ist zudem als gekrümmte Platte mit zusätzlichen Führungsflächen 314' und 314" ausgebildet, welche sich nach oben hin vom Verriegelungselement 317 zunehmend abneigen, um ein sichereres Aufsetzen eines Lastbehälters gewährleisten zu können als dies vielleicht in der ersten Ausführung der Fall ist. Auflage 311 und Anschlag 313 sind ungefähr im rechten Winkel gegeneinander geneigt, bzw. schliessen einen Winkelraum von ungefähr 90° ein (wie oben für die erste Ausführung gezeigt). Die Auflage 311 kann sich mit zunehmendem Abstand vom Anschlag 313 gegenüber der Auflage 311 unmittelbar beim Anschlag 313 abneigen. Das Verriegelungselement 317 ist in einer Aussparung 319 der Auflage 311 beweglich eingelassen. Ein erster Teil des Verriegelungselements kann aus der Aussparung herausragen, während ein zweiter Teil unter der Auflage bleibt. Der erste Teil des Verriegelungselements besitzt zwei Funktionsflächen, d.h. eine erst 321 und eine zweite 323 Funktionsfläche. Die zwei Funktionsflächen sind voneinander abgeneigt und definieren dadurch eine Scheitellinie 324. Die Scheitellinie 324 ist hierbei ungefähr parallel zu Auflagefläche und Anschlagfläche. Bewegt sich das Verriegelungselement 317, dann bleibt die parallele Ausrichtung der Scheitellinie 324 zur Auflagefläche 312 und zur Anschlagfläche 314 zweckmässigerweise erhalten. Wie schon im ersten und zweiten Ausführung aufgezeigt, dient die erste Funktionsfläche 321 zur Blockierung einer möglichen Rutschbewegung eines Ladebehälters, d.h. blockiert auch unter externem Druck (insbesondere unter externem horizontalem Schiebedruck auf ihre Fläche) und dient die zweite Funktionsfläche als Angriffsfläche für einen externen Druck (insbesondere für einen externem horizontalem Schiebedruck auf ihre Fläche), aufgrund dessen das Verriegelungselement einsinkt und den Weg über die bzw. über der Auflagefläche freigibt. In seiner Sperrposition ragt das Verriegelungselement 317 mit seiner ersten Funktionsfläche 321 aus der Aussparung 319 heraus (Fig. 3a-3f). In einer anderen Position ist das Verriegelungselement 317 in der Stützstruktur versenkt; im Folgenden auch Senkposition genannt (Fig. 3g). Ist das Verriegelungselement 317 in Senkposition, so reichen seine zweite Funktionsfläche 323 und die Scheitellinie 324 maximal bis auf das Niveau der Auflage 311, während der übrige Teil des Verriegelungselements 317 in der Stützstruktur unterhalb der Auflage 311 versenkt ist. Zwei überstehende Finger 329 und 329' am Verriegelungselement 317 können die Sperrposition definieren, indem die Finger 329 und 329' unterhalb der Auflage 312 über den Rand der Aussparung 319 ragen und dadurch ein weiteres Austreten des Verriegelungselements aus der Aussparung 319 verhindern. Gemäss dieser dritten Ausführungsform ist das Verriegelungselement 317 verschiebbar an der Stützstruktur befestigt. Hierfür ist zum Beispiel unterhalb der Aussparung 319 zur Führung ein Leitprofil 326 in der Stützstruktur 315 untergebracht. Gleichzeitig ist das Verriegelungselement 317 mit einem in das Leitprofil 326 passendes Gegenprofil 330 versehen. Die Beiden Profile sind hierbei derart ausgestaltet, dass das Gegenprofil 330 verschiebbar vom Leitprofil 326 aufgenommen ist (Fig. 3b bis 3g). Der überstehende Finger 329 verhindert ein Austreten des Verriegelungselements 317 aus der Aussparung 319 und gleichzeitig dadurch auch ein Austreten aus dem Leitprofil 326. Aufgrund dieser konstruktiven Ausführung funktioniert das Verriegelungselement wie ein Schieber: es kann ein- und ausgeschoben werden.

Das Verriegelungselement 317 kann durch ein Kraftorgan in seine Sperrposition gedrückt oder gezogen werden. Die hier vorliegende dritte Ausführung weist vorteilhafterweise ebenfalls Haltemittel 331 und 333 auf, welche als Aufnahme für je ein Ende eines Kraftorgans (z.B. einer Feder) dienen (Fig. 3b). Ein solches erstes Haltemittel 331 kann an der Stützstruktur 315 oder wie hier gezeigt insbesondere am Leitprofil 326 ausgebildet sein (Fig. 3e-3g). Zweckmässig ist z.B. eine Bohrung 337 zur Aufnahme eines Kraftorgans im Fuss des Leitprofils 326 angelegt. Ein zweites Haltemittel 333 ist am Verriegelungselement 317 z.B. in Form einer Senkbohrung im unteren Teil des Verriegelungselements angelegt. Das Kraftorgan selbst, d.h. hier im Speziellen eine Feder, ist in den Figuren nicht dargestellt.

Die Stützstruktur 315 beinhaltet in der vorliegenden dritten Ausführungsform zweckmässigerweise zwei gleichartige näherungsweise als L-Form ausgelegte Teilstrukturen 343 und 343', wobei diese beiden Teilstrukturen parallel beabstandet angeordnet sind, um die Auflage 311 und eine weitere Stützstruktur 316 zu beherbergen (ähnlich wie in der oben aufgezeigten zweiten Ausführung). Die Auflage 311 ist mit beiden Teilstrukturen 343 und 343' verbunden. Die weitere Stützstruktur 316 ist hier als Steckprofil (insbesondere als Vierkantrohr) ausgeführt, welches zwischen den Teilstrukturen 343 und 343' aufgenommen ist und durch diese fixiert ist. Das Steckprofil 316 erstreckt sich nach oben über das Niveau der Auflage 311 und formt mit einer seiner Seiten den Anschlag 313 bzw. ist an jener seiner Seiten, welche zum Verriegelungselement 317 hin gerichtet ist, mit einer Platte belegt, welche als Anschlagfläche 312 dient. Das Steckprofil 316 erstreckt sich mit seinem Steckteil 316' vorzugsweise vertikal nach unten über die L-förmige Stützstruktur 315 hinaus, um ein Einstecken in ein Gegenstück 344, welches z.B. auf einer Ladefläche eines Transportfahrzeugs verankert ist, zu erlauben.

Die Sicherungseinrichtung dieser dritten Ausführungsform ist ähnlich der zweiten Ausführungsform beispielhaft als herausnehmbares Anschlagsteil konzipiert.

Neben den genannten Ausführungsformen sind im Rahmen der vorliegenden Erfindung weitere Ausführungsformen denkbar, insbesondere solche, welche sich aus einer Kombination der genannten Ausführungsformen bilden lassen.

Weitere bevorzugte Konstruktionsmerkmale des Verriegelungselements in seiner Sperrposition sind im Folgenden aufgezeigt.

### Vorteilhafte Sperrposition eines erfindungsgemässen Verriegelungselements:

In der Sperrposition des Verriegelungselements 117, 217, 317 steigt die zweite Funktionsfläche 123, 223, 323 in Richtung zum Anschlag hin relativ flach an. Der Steigungswinkel (β) der zweiten Funktionsfläche liegt vorteilhafterweise bei maximal 60°, bevorzugt ist ein Steigungswinkel (β) im Bereich von 20 bis 50 Grad, weiter bevorzugt ist ein Steigungswinkel (β) von maximal 30 ±5 Grad (siehe Fig. 1i). Bei diesen vorteilhaften Steigungen kann der Behälterfuss eines in Richtung Anschlag geschobenen Behälters das Verriegelungselement 117, 217, 317 in die Aussparung 119, 219, 319 eindrücken und darüber hinweg gleiten, ohne dass der Gleitbewegung ein übermässiger Wiederstand entgegensteht. Dadurch kann das Aufladen eines Ladebehälters einfach und speditiv erfolgen.

Im Weiteren ragt ein erfindungsgemässes Verriegelungselement 117, 217, 317 in seiner Sperrposition vorteilhafterweise derart aus der Aussparung 119, 219, 319 heraus, dass die erste Funktionsfläche 121, 221, 321 sich relativ steil ansteigend (d.h. nach oben hin) vom Anschlag entfernt. Der vorteilhafte Steigungswinkel (α) liegt im Bereich von ungefähr 30° bis 100°, vorteilhaft bei mindestens 45° und/oder maximal bis 90°. Weiter vorteilhaft ist ein Steigungswinkel (α) von 70 ±10 Grad, noch weiter bevorzugt ist ein Steigungswinkel (α) von 70 ±5 Grad (siehe Fig. 1i).

Diese Sperrposition des Verriegelungselements garantiert eine gute Lastfixierung und somit hohe Sicherheit. Es wird gewährleistet, dass ein Behälterfuss der zwischen Anschlag 113, 213, 313 und Verriegelungselement 117, 217, 317 auf oder leicht über der Auflage 111, 211, 311 liegt, durch den hervorstehenden Verriegelungselement auf seiner Position gehalten wird, indem die steile erste Funktionsfläche 121, 221, 321 einen Behälterfuss daran hindert nach hinten wegzugleiten (z.B. beim Anfahren des Transportfahrzeugs).

Um auch auf holprigen Strassen und höheren Fahrgeschwindigkeiten genügend Lastfixierung zu garantieren, ist die Scheitellinie 124, 224, 324 des Verriegelungselements zumindest 50 mm, bevorzugt zumindest 60 mm über der Auflage 111, 211, 311. D.h. der höchste Punkt des Verriegelungselements 117, 217, 317 (d.h. die Scheitellinie) streckt zumindest um diese Höhendifferenz (h) aus der Aussparung 119, 219, 319 heraus (Fig. 1i).

### Verwendung der beschriebenen Sicherungseinrichtungen:

Eine erfindungsgemässe Sicherungseinrichtung 461, welche z.B. gemäss einer der vorgenannten Ausführungsvarianten ausgeführt ist, wird vorzugsweise als Frontalanschlag auf einer Ladefläche 463 eines Transportfahrzeugs 465 verwendet (Fig. 4). Die Sicherungseinrichtung 461 kann hierzu in eine Aufnahme 467 auf der Ladefläche 463 eines Transportfahrzeugs 465 aufgenommen werden.

Die Aufnahme 467 kann als Ladeflächenvertiefung ausgeführt sein. Die Aufnahme 467 kann z.B. für eine herausnehmbare (insbesondere auswechselbare), und/oder verstellbare (insbesondere abkippbare und/oder versenkbare) Sicherungseinrichtung ausgeführt sein, wofür die als Ladeflächenvertiefung gestaltete Aufnahme in Fahrtrichtung verlaufende Innenwandungen aufweist, welche mit U-förmigen Senken und Rinnen, welche Senken und Rinnen die Querbolzen der Sicherungseinrichtung aufnehmen, ausgestattet sind. Die Sicherungseinrichtung 461 kann als Anschlag für Wechselbehälter (d.h. austauschbare Ladungsbehälter, wie z.B. Mulden, Container und Presscontainer, Paletten oder andere Vorrichtungen mit geeigneten Fixierfüssen) genutzt werden, indem die Sicherungseinrichtung mit nach oben gerichteter Auflage 111, 211, 311 und vorstehendem Anschlag 113, 213, 313 in die Aufnahme 467 eingelegt wird. Vorteilhafterweise dient zumindest ein Teil der Ladefläche 163 als Lastauflage 169 für den Wechselbehälter.

Wird die Sicherungseinrichtung nicht gebraucht, kann sie entfernt werden oder mit nach unten gerichteter Auflage 111 und nach unten abstehendem Anschlag 113 eingelegt werden, insoweit die Aufnahme 467 dafür ausgelegt ist. Auf diese Weise ist die lose Sicherungseinrichtung in einer Lagerposition verstaut und geht nicht verloren, wenn sie nicht gebraucht wird, ist aber jederzeit griffbereit auf der Ladefläche 463.

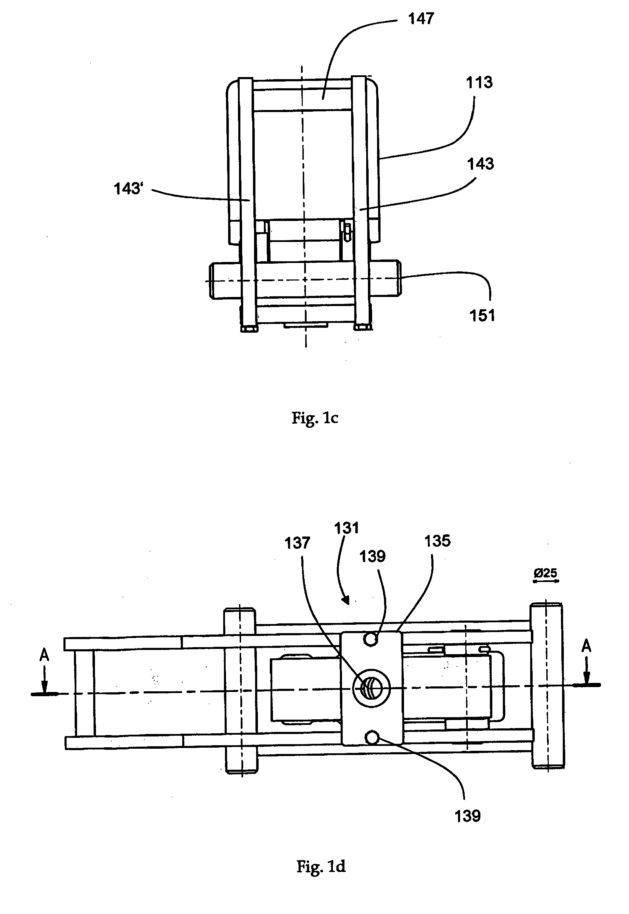

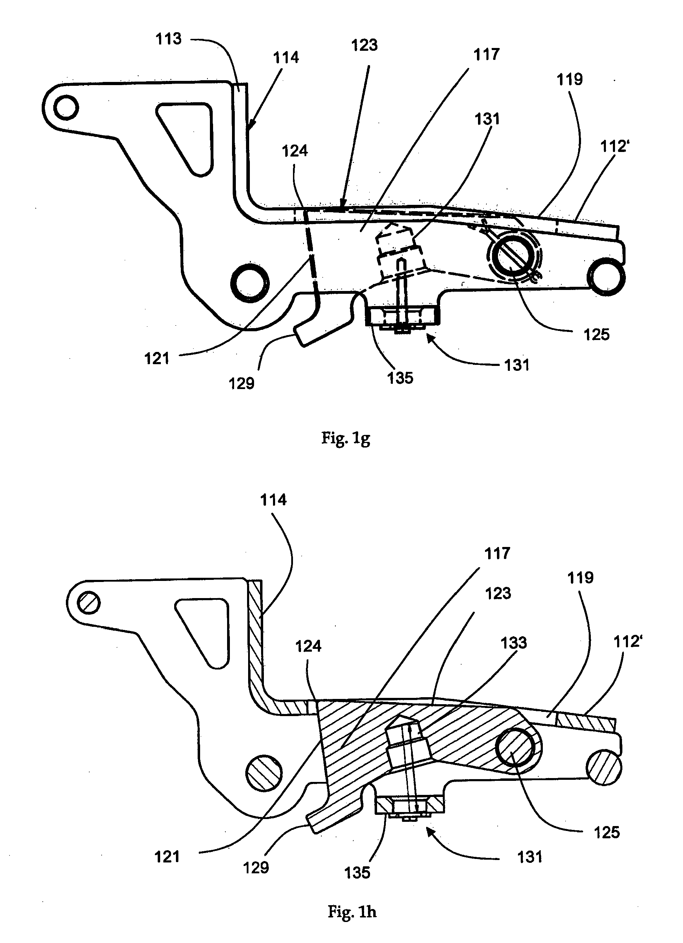

In den Figuren 1-3 werden die Sicherungseinrichtungen im Wesentlichen einteilig mit beweglichem Verriegelungselement beschrieben. In weiteren Ausführungsvarianten sind mehrteilige, d.h. zumindest zweiteilige, Ausführungen möglich. Die Mehrteiligkeit wird im Folgenden ausgeführt.

Ein erster Teil kann hierbei einen Anschlag gegebenenfalls mit eigener Stützstruktur beinhalten. Anschlag und/oder Stützstruktur können hierbei gegebenenfalls integraler und gegebenenfalls fixer Teil einer Ladefläche eines Transportfahrzeugs oder eines Anhängers sein. Alternativ kann der erste Teil als eigenes Teil ausgeführt sein, welches z.B. durch Einstecken oder Verschrauben auf einer Ladefläche angebracht wird. Ein zweiter Teil kann das Verriegelungselement gegebenenfalls mit eigener Stützstruktur und Kraftorgan beinhalten. Der erste Teil mit Anschlag und der zweite Teil mit Verriegelungselement sind auf einem Lastträger derart anbringbar bzw. werden auf einem Lastträger derart angebracht, dass Anschlag und Verriegelungselement in der Sperrposition eine Behälterfusssicherung bilden, in welche sich der Behälterfuss gegebenenfalls unter Wegdrücken des Verriegelungselements einbringen lässt und aus welcher sich der Behälterfuss unter Abheben der Mulde herausheben lässt. Strukturen der Ladeflächen bilden hierbei gegebenenfalls die Stützstruktur bzw. Teile der Stützstruktur, welche Anschlag und Verriegelungselement miteinander verbindet bzw. verbinden. Zweckmässigerweise wird der Anschlag als Frontanschlag ausgebildet und das Verriegelungselement wird diesbezüglich hinter dem Anschlag platziert.

In dieser mehrteiligen Ausführungsform können nun z.B. der erste Teil und/oder der zweite Teil unabhängig voneinander fest, herausnehmbar oder abkippbar am Lastfahrzeug oder Anhänger angebracht sein.

Für alle Ausführungsformen ist neben der Verwendung als Frontanschlag auch die Verwendung als Seitenanschlag oder Rückanschlag mit entsprechender Sicherung denkbar.

### BEZUGSZEICHENLISTE

- 111: Auflage
- 112, 112': Auflagefläche
- 113: Anschlag
- 114: Anschlagfläche
- 115: Stützstruktur
- 117: Verriegelungselement (auch Stopper genannt)
- 118: Innenkante oder ggf. Radius
- 119: Aussparung
- 120: Ladungsbehälterfuss
- 121: Erste Funktionsfläche
- 123: Zweite Funktionsfläche
- 124: Scheitellinie
- 125: Drehachse
- 127: Splint
- 129: Finger bzw. Vorsprung
- 131: Erstes Haltemittel (an der Stützstruktur)
- 133: Zweites Haltemittel (am Verriegelungselement)
- 135: Brücke
- 137: Bohrung
- 139: Schraube zur Befestigung der Brücke
- 143, 143': Teilstrukturen
- 145, 145': Verstrebungen
- 147: Brückenverbindung (ggf. Bolzen)
- 149: Erste Aufnahme für einen ersten Querbolzen
- 150: Zweite Aufnahme für einen zweiten Querbolzen
- 151: Erster Querbolzen
- 153: Zweiter Querbolzen
- 211: Auflage
- 212, 212': Auflagefläche
- 213: Anschlag
- 214, 214', 214": Anschlagfläche
- 215: Stützstruktur
- 216, 216': Weitere Stützstruktur ausgebildet als Steckrohr mit Steckteil
- 217: Verriegelungselement (auch Stopper genannt)
- 219: Aussparung
- 220: Ladungsbehälterfuss (oder auch -bolzen genannt)
- 221: Erste Funktionsfläche
- 223: Zweite Funktionsfläche
- 224: Scheitellinie
- 225: Drehachse
- 228: Splintbohrung
- 229: Finger bzw. Vorsprung
- 231: Erstes Haltemittel (an der Stützstruktur)
- 233: Zweites Haltemittel (am Verriegelungselement)
- 235: Brücke
- 237: Bohrung
- 239: Schraube zur Befestigung der Brücke
- 243, 243': Teilstrukturen
- 244: Gegenstück zum Steckteil
- 311: Auflage
- 312, 312': Auflagefläche
- 313: Anschlag
- 314: Anschlagfläche
- 315: Stützstruktur
- 316, 316': Weitere Stützstruktur ausgebildet als Steckrohr mit Steckteil
- 317: Verriegelungselement (auch Stopper genannt)
- 319: Aussparung
- 320: Ladungsbehälterfuss
- 321: Erste Funktionsfläche
- 323: Zweite Funktionsfläche
- 324: Scheitellinie
- 326: Leitprofil
- 329, 329': Finger bzw. Vorsprung
- 330: Gegenprofil
- 331: Erstes Haltemittel (an der Stützstruktur)
- 333: Zweites Haltemittel (am Verriegelungselement)
- 337: Bohrung
- 343, 343': Teilstrukturen
- 344: Gegenstück zum Steckteil
- 461: Sicherungseinrichtung
- 463: Ladefläche
- 465: Transportfahrzeug
- 467: Aufnahme in der Ladefläche für eine Sicherheitseinrichtung
- 469: Lastauflage, d.h. Last tragende Teile der Ladefläche

## Patentansprüche

1. Sicherungseinrichtung zur Sicherung von austauschbaren Ladungsbehältern auf einem Absetzkipper, beinhaltend
- einen Anschlag (113, 213, 313),
- eine Stützstruktur (115, 215, 315), welche den Anschlag trägt, und
- ein zwischen einer Passierposition und einer Sperrposition bewegliches Verriegelungselement (117, 217, 317), welches an der Stützstruktur (115, 215, 315) angeordnet ist,
**dadurch gekennzeichnet,**
**dass** in Sperrposition eine nach oben offene Senke zwischen Anschlag (113, 213, 313) und Verriegelungselement (117, 217, 317)derart ausgebildet ist, dass zum Entladen ein Ladungsbehälter aus der Sieherungseinrichtung herausgehoben werden kann, während das Verriegelungselement in Sperrposition verbleibt.

2. Sicherungseinrichtung nach dem vorangehenden Anspruch, **dadurch gekennzeichnet, dass** sich das Verriegelungselement zwischen einer Sperrposition vor dem Anschlag und einer in Bezug auf die Sperrposition tiefer gesetzten Passierposition bewegen lässt.

3. Sicherungseinrichtüng nach einem der vorangehenden Ansprüche, **dadurch gekennzeichnet, dass** das bewegliche Verriegelungselement (117,217,317) in einer Aussparung (119, 219, 319) der Stützstruktur (115, 215, 315) angeordnet ist.

4. Sicherungseinrichtung nach einem der vorangehenden Ansprüche, **dadurch gekennzeichnet, dass** das Verriegelungselement mit zumindest einem Kraftorgan zusammenwirkt und das Verriegelungselement durch das Kraftorgan auf einer Sperrposition gehalten wird.

5. Sicherungseinrichtung nach einem der vorangehenden Ansprüche, **dadurch gekennzeichnet, dass** das Verriegelungselement (117, 217, 317) vom Anschlag (113, 213, 313) beabstandet ist.

6. Sicherungseinrichtung nach einem der vorangehenden Ansprüche, **dadurch gekennzeichnet, dass** das Verriegelungselement (117, 217, 317) als Klappe oder als Schieber ausgeführt ist, wobei vorzugsweise das Verriegelungselement (117, 217), welches als Klappe ausgeführt ist, um eine Achse (125) verschwenkbar ist, oder dass das Verriegelungselement (317), welches als Schieber ausgeführt ist, entlang einer Führung (326) verschiebbar ist.

7. Sicherungseinrichtung nach einem der vorangehenden Ansprüche, **dadurch gekennzeichnet, dass** das Verriegelungselement (117, 217, 317) in Sperrposition vorgespannt ist, sodass es aus dieser Position unter äusserem Druck in die Passierposition absenkbar ist.

8. Sicherungseinrichtung nach einem der vorangehenden Ansprüche, **dadurch gekennzeichnet, dass** das Verriegelungselement einen keilartigen Teil aufweist, welcher eine erste Funktionsfläche (121, 221, 321) und eine zweite Funktionsfläche (123, 223, 323) beinhaltet, welche Funktionsflächen gegeneinander abgewinkelt eine Scheitellinie (124, 224, 324) bilden, wobei in Sperrposition die erste Funktionsfläche zum Anschlag hin gerichtet ist, während die zweite Funktionsflache dem Anschlag abgewandt ist.

9. Sicherungeinrichtung nach dem vorangehenden Anspruch 8, **dadurch gekennzeichnet, dass** in einer Gleitrichtung auf den Anschlag (113, 213, 313) zu diezweite Funktionsfläche (123, 223, 323) langer ist als die erste Funktiönsfläche (121, 221, 321).

10. Sicherungseinrichtung nach einem der vorangehenden Ansprüche 8 oder 9, **dadurch gekennzeichnet, dass** das Verriegelungselement (117, 217, 317) unter äusserem Druck auf die zweite Funktionsfläche (123, 223, 323) absenkbar ist.

11. Sicherungseinrichtung nach einem der vorangehenden Ansprüche 8-10, **dadurch gekennzeichnet, dass** bei fehlendem äusseren Druck auf die zweite Funktionsfläche (123, 223, 323) die erste Funktionsfläche (121, 221, 321) dem Anschlag (113, 213, 313) gegenüber steht, sodass die Senke zwischen Anschlag und Verriegelungselement (117, 217, 317) ausgebildet ist.

12. Sicherungseinrichtung nach einem der vorangehenden Ansprüche, dadurch gekenrizeichnet, dass das Verriegelungselement (117, 217, 317) einen Finger (129, 229, 329, 329') besitzt, welcher den Weg des Verriegelungselements begrenzt.

13. Absetzkipper zur Aufnahme von austauschbaren Ladungsbehältern auf dessen Ladefläche (463), dadurch gekennzeichnent, däss auf der Ladefläche (463) zumindest eine Sicherungseinrichtung (461) gemäss einem der vorhergehenden Ansprüche angebracht ist.

14. Absetzkipper nach dem vorangehenden Anspruch 13, **dadurch gekennzeichnet, dass** die zumindest eine Sicherungseinrichtung (461) als Frontalanschlag angebracht ist.

15. Absetzkipper nach einem der vorangehenden Ansprüche 13-14, **dadurch gekennzeichnet, dass** die zumindest eine Sicherungseinrichtung fest, teilweise fest, herausnehmbar oder verstellbar angebracht ist.

16. Verwendung einer Sicherungseinrichtung nach einem der Ansprüche 1-12 zur Sicherung von Behältern auf Teleskopabsetzkippern, Knickarmabsetzkippern und/ oder Starrarmabsetzkippern.

## Claims

1. Safety device for securing interchangeable load containers on a skip loader containing:
- a stopper (113, 213,313),
- a support structure (115, 215, 315) that supports the stopper and
- a locking element (117, 217, 317), movable between a passing position and a locking position, that is placed on the support structure (115, 215, 315),
**characterized in that** in locking position an upwards open sink is configured between the stopper (113, 213, 313) and the locking element (117, 217, 317) in such a manner that for unloading a load container can be lifted out of the safety device while the locking element remains in the locking position.

2. Safety device according to the preceding claim, **characterized in that** the locking element can be moved between a locking position in front of the stopper and a passing position set lower with respect to the locking position.

3. Safety device according to one of the preceding claims, **characterized in that** the movable locking element (117, 217, 317) is placed in a recess (119, 219, 319) of the support structure (115, 215, 315).

4. Safety device according to one of the preceding claims, **characterized in that** the locking element cooperates with at least one power organ and that the locking element is maintained in a locking position.

5. Safety device according to one of the preceding claims, **characterized in that** the locking element (117, 217, 317) is spaced from the stopper (113, 213, 313).

6. Safety device according to one of the preceding claims, **characterized in that** the locking element (117, 217, 317) is realized as a flap or as a slide, whereby preferably the locking element (117, 217, 317) that is realized as a flap is swivellable about an axis (125) or that the locking element (117, 217, 317) that is realized as a slide is displaceable along a guide (326).

7. Safety device according to one of the preceding claims, **characterized in that** the locking element (117, 217, 317) is prestressed in locking position so that it can be lowered from this position into the passing position under external pressure.

8. Safety device according to one of the preceding claims, **characterized in that** the locking element has a wedge type part that contains a first functional surface (121, 221, 321) and a second functional surface (123, 223, 323), which functional surfaces offset the one with respect to the other form an apex line (124, 224, 323), whereby in locking position the first functional surface is orientated to the stopper while the second functional surface is opposed to the stopper.

9. Safety device according to the preceding claim 8, **characterized in that** in a sliding direction towards the stopper (113, 213, 313) the second functional surface (123, 223, 323) is longer than the first functional surface (121, 221, 321).

10. Safety device according to one of the preceding claims 8 or 9, **characterized in that** the locking element (117, 217, 317) can be lowered to the second functional surface (123, 223, 323) under external pressure.

11. Safety device according to one of the preceding claims 8 to 10, **characterized in that** in case of a lack of external pressure onto the second functional surface (123. 223, 323) the first functional surface (121, 221, 321 is facing the stopper (113, 213, 3131) so that the sink is formed between the stopper and the locking element (117, 217, 317).

12. Safety device according to one of the preceding claims, **characterized in that** the locking element (117, 217, 317) has a finger (129, 29, 329, 329') that limits the path of the locking element.

13. Skip loader for receiving interchangeable load containers on the loading surface (463) thereof, **characterized in that** at least one safety device (461) according to one of the preceding claims is mounted on the loading surface (463).

14. Skip loader according to the claim 13, **characterized in that** the at least one safety device (461) is mounted as a front stopper.

15. Skip loader according to one of the preceding claims 13-14, **characterized in that** the at least one safety device is mounted fixed, partially fixed, removable or adjustable.

16. Use of a safety device according to one of the claims 1 to 12 for securing containers on telescopic skip loaders, articulated arm skip loaders and/or rigid arm skip loaders.

## Revendications

1. Dispositif de sécurité pour le blocage de conteneurs de charge interchangeables sur une multibenne contenant :
- une butée (113, 213, 313),
- une structure d'appui (115, 215, 315) qui porte la butée et
- un élément de verrouillage (117, 217, 317), mobile entre une position de déblocage et une position de blocage, qui est placé sur la structure d'appui (115, 215, 315),
**caractérisé en ce qu'**un creux ouvert vers le haut est configuré, en position de blocage, entre la butée (113, 213, 313) et l'élément de verrouillage (117, 217, 317) de telle manière que pour le déchargement un conteneur de charge peut être dégagé en soulevant du Dispositif de blocage pendant que l'élément de verrouillage reste en position de blocage.

2. Dispositif de sécurité selon la revendication précédente, **caractérisé en ce que** l'élément de verrouillage peut se déplacer entre une position de blocage avant la butée et une position de déblocage située plus bas par rapport à la position de blocage.

3. Dispositif de sécurité selon l'une des revendications précédentes, **caractérisé en ce que** l'élément de verrouillage mobile (117, 217, 317) est placé dans un évidement (119, 219, 319) de la structure d'appui (115, 215, 315).

4. Dispositif de sécurité selon l'une des revendications précédentes, **caractérisé en ce que** l'élément de verrouillage coopère avec au moins un organe de force et l'élément de verrouillage est maintenu sur une position de blocage par l'organe de force.

5. Dispositif de sécurité selon l'une des revendications précédentes, **caractérisé en ce que** l'élément de verrouillage (117, 217, 317) est espacé de la butée (113, 213, 313).

6. Dispositif de sécurité selon l'une des revendications précédentes, **caractérisé en ce que** l'élément de verrouillage (117, 217, 317) est réalisé comme un clapet ou comme un verrou, cependant que de préférence l'élément de verrouillage (117, 217, 317) qui est réalisé comme un clapet est pivotant autour d'un axe (125) ou que l'élément de verrouillage (117, 217, 317) qui est réalisé comme un verrou est déplaçable le long d'un guidage (326).

7. Dispositif de sécurité selon l'une des revendications précédentes, **caractérisé en ce que** l'élément de verrouillage (117, 217, 317) est précontraint en position de blocage si bien qu'il peut être abaissé de cette position dans la position de déblocage par une pression extérieure.

8. Dispositif de sécurité selon l'une des revendications précédentes, **caractérisé en ce que** l'élément de verrouillage présente une partie de type clavette qui contient une première surface fonctionnelle (121, 221, 321) et une seconde surface fonctionnelle (123, 223, 323), lesquelles surfaces fonctionnelles forment en étant coudées l'une contre l'autre une ligne de sommet (124, 224, 324), cependant qu'en position de blocage la première surface fonctionnelle est orientée vers la butée tandis que la seconde surface fonctionnelle est détournée de la butée.

9. Dispositif de sécurité selon la revendication précédente 8, **caractérisé en ce que** dans un sens de coulissement vers la butée (113, 213, 313) la seconde surface fonctionnelle (123, 223, 323) est plus longue que la première surface fonctionnelle (121, 221, 321).

10. Dispositif de sécurité selon l'une des revendications précédentes, **caractérisé en ce que** l'élément de verrouillage (117, 217, 317) peut être abaissé sur la seconde surface fonctionnelle (123, 223, 323) par une pression extérieure.

11. Dispositif de sécurité selon l'une des revendications précédentes 8 à 10, **caractérisé en ce que**, en cas de manque de pression extérieure sur la seconde surface fonctionnelle (123, 223, 323) la première surface fonctionnelle (121, 221, 321) est en face de la butée (113, 213, 313) si bien que le creux est configuré entre la butée et l'élément de verrouillage (117, 217, 317).

12. Dispositif de sécurité selon l'une des revendications précédentes, **caractérisé en ce que** l'élément de verrouillage (117, 217, 317) forme un doigt (129, 229, 329, 329') qui limite le parcours de l'élément de verrouillage.

13. Multibenne pour le logement de conteneurs de charge interchangeables sur la surface de chargement (463) de celle-ci, **caractérisée en ce qu'**au moins un dispositif de sécurité (461) selon l'une des revendications précédentes est monté.

14. Multibenne selon la revendication précédente 13, **caractérisée en ce que** le dispositif de sécurité qui existe au moins (461) est monté comme butée frontale.

15. Multibenne selon l'une des revendications précédentes 13-14, **caractérisée en ce que** le dispositif de sécurité qui existe au moins est monté de manière fixe, partiellement fixe, amovible ou réglable.

16. Utilisation d'un dispositif de blocage selon l'une des revendications précédentes 1 à 12 pour la fixation de conteneurs sur des multibennes télescopiques, des multibennes à bras articulé et/ou des multibennes à bras rigide.
